# EUROPÄISCHE PATENTSCHRIFT

(11) **EP 4 215 045 B1**
(45) Veröffentlichungstag und Bekanntmachung des Hinweises auf die Patenterteilung: **20.12.2023**
(21) Anmeldenummer: 22210097.6
(22) Anmeldetag: 29.11.2022
(51) Int. Cl.: A01M 7/00

(54) **LANDWIRTSCHAFTLICHES GERÄT ZUR AUTOMATISCHEN ERKENNUNG UND BEHANDLUNG VON DURCHWUCHSKARTOFFEL-UNKRAUTPFLANZEN, SENSORMODUL, UND FARBDETEKTOR**
AGRICULTURAL IMPLEMENT FOR AUTOMATICALLY DETECTING AND TREATING SUBMERGIBLE BERRY ROOT CROPS, SENSOR MODULE, AND COLOR DETECTOR
APPAREIL AGRICOLE POUR LA DÉTECTION ET LE TRAITEMENT AUTOMATIQUES DE MAUVAISES HERBES EN POMME DE TERRE, MODULE DE CAPTEUR, ET DÉTECTEUR DE COULEUR

(30) Priorität: 24.01.2022 DE 202022100373 U
(43) Veröffentlichungstag der Anmeldung: 26.07.2023
(73) Patentinhaber: Premosys GmbH, 54570 Kalenborn-Scheuern (DE)
(72) Erfinder: Hommes, Marcel, 54568 Gerolstein (DE); Kuhl, Matthias, 54570 Kalenborn-Scheuern (DE); Kuhl, Markus, 54570 Kalenborn-Scheuern (DE)
(74) Vertreter: Patentanwälte Buschhoff Hennicke Althaus

(56) Entgegenhaltungen:
- EP-A1- 3 165 089
- EP-B1- 3 232 775
- DE-A1-102018 217 742

## Beschreibung

Die vorliegende Erfindung betrifft ein landwirtschaftliches Gerät zur automatischen Erkennung und Behandlung von eine Agrarbodenfläche bedeckenden Unkrautpflanzen nach Gattung des unabhängigen Anspruchs 1. Ferner betrifft die vorliegende Erfindung ein Sensormodul gemäß Anspruch 22 sowie einen Farbdetektor gemäß Anspruch 23, die für ein erfindungsgemäßes landwirtschaftliches Gerät vorgesehen sind. Relevante Stand der Technik Dokumente auf diesem Gebiet sind unter anderem: EP 3 165 089 A1, DE 10 2018 217742 A1,EP 3 232 775 B1.

### Stand der Technik

Auf landwirtschaftlich genutzten Bodenflächen, auf denen für eine spätere Ernte ausgesäte bzw. gepflanzte Kulturpflanzen bzw. Nutzpflanzen heranwachsen, schmälern Unkrautpflanzen den wirtschaftlichen Ertrag der Agrarbodenfläche. Die Unkrautpflanzen konkurrieren mit den Nutzpflanzen um Nährstoffe, Licht und Wasser und sind zudem mögliche Eintrittspforten und Wirte für Schädlinge und Pflanzenkrankheiten. Zur Bekämpfung von Unkrautpflanzen werden üblicherweise Herbizide auf die Agrarbodenfläche und die Pflanzen ausgebracht. Angesichts des in den vergangenen Jahren stark gewachsenen Umweltbewusstseins und einer beabsichtigten Transformation hin zu einer ökologischen Landwirtschaft soll die Ausbringung von Herbiziden so weit wie möglich reduziert werden und ist teilweise bereits durch den Gesetzgeber stark einschränkt worden.

Unter Fokussierung auf diese Thematik hat die Anmelderin bereits in DE 10 2015 119 026 A1 ein System zur effizienten und punktgenauen Ausbringung einer Herbizid-Flüssigkeit an bzw. auf Unkrautpflanzen vorgestellt. Das System ist ausgebildet, Unkrautpflanzen mittels lichtsensitiver Sensoren zu erkennen, und die Herbizid-Flüssigkeit gezielt nur auf erkannte Unkrautpflanzen zu sprühen.

Eine besonders problembehaftete Art von Unkrautpflanzen als Wirt für Schädlinge und Pflanzenkrankheiten sind sogenannte Durchwuchskartoffelpflanzen, die aus einer im Vorjahr erfolgten Kartoffelernte in dem Agrarboden unerwünscht verbliebenen Knollen von Kartoffelpflanzen wachsen und im Folgejahr in Konkurrenz zu den gemäß einer Fruchtfolge neu gesäten bzw. gepflanzten Nutzpflanzen auf der Agrarbodenfläche heranwachsen. Zur Bekämpfung von Durchwuchskartoffelpflanzen müssen besonders große Herbizidmengen wiederholt ausgebracht werden, was im Widerspruch zum allgemein angestrebten Umweltschutz und jüngst verabschiedeten gesetzlichen Vorgaben steht.

Daher wäre die Verfügbarkeit eines landwirtschaftlichen Geräts wünschenswert, mit dem eine wirkungsvolle Bekämpfung von als Unkrautpflanzen auftretenden Durchwuchskartoffelpflanzen möglich ist, ohne dass der Agrarboden und die Nutzpflanzen durch Herbizide beeinträchtigt werden.

Offenbarung der Erfindung.

Im Rahmen der vorliegenden Erfindung hat sich die Anmelderin deshalb die Aufgabe gestellt, ein landwirtschaftliches Gerät bereitzustellen, mit dem auf einer Agrarbodenfläche wachsende Unkrautpflanzen, insbesondere Durchwuchskartoffelpflanzen, noch gezielter, effizienter und umweltschonender behandelt bzw. bekämpft werden können. Außerdem hat sich die Anmelderin die Aufgabe gestellt, eine Sensorvorrichtung und einen Farbdetektor bereitzustellen, die zur Lösung der Aufgabe der vorliegenden Erfindung beitragen und für das bereitzustellende landwirtschaftliche Gerät vorgesehen sind.

Die oben dargestellte Aufgabenstellung der vorliegenden Erfindung wird durch ein unten mehr im Detail vorgestelltes, landwirtschaftliches Gerät mit den Merkmalen des Anspruchs 1 gelöst. Vorteilhafte Ausführungsbeispiele des Geräts ergeben sich aus den zusätzlichen Merkmalen der abhängigen Ansprüche 2 bis 21. Außerdem wird die oben dargestellte Aufgabenstellung durch ein Sensormodul mit den Merkmalen des Anspruchs 22 sowie ferner durch einen Farbdetektor mit den Merkmalen des Anspruchs 23 gelöst.

Die Anmelderin hat als Ausgangspunkt für die Lösung der Erfindung das oben erwähnte System gewählt, das als ein landwirtschaftliches Gerät zur automatischen Erkennung und Behandlung von eine Agrarbodenfläche bedeckenden Unkrautpflanzen aufgefasst werden kann.

Dieses landwirtschaftliche Gerät hat mehrere, individuell temporär aktivierbare Unkrautbehandlungsvorrichtungen zur Behandlung von Unkrautpflanzen in einem jeweiligen Breitenteilabschnitt einer durch die Breitenteilabschnitte definierten gesamten Bearbeitungsbreite des landwirtschaftlichen Geräts. Die Breitenteilabschnitte sind zueinander benachbart angeordnet. Einem jeweiligen Breitenteilabschnitt ist mindestens eine, bevorzugt genau eine der Unkrautbehandlungsvorrichtungen zugeordnet. Außerdem ist das landwirtschaftliche Gerät mit mindestens einer Lichtemittiereinheit zum Emittieren von sichtbarem, insbesondere wei-ßem, Licht in Richtung der Agrarbodenfläche über die gesamte Bearbeitungsbreite versehen. Zudem umfasst das landwirtschaftliche Gerät mehrere lichtsensitive Farbsensoren zum Erfassen des in den Breitenteilabschnitten von der Agrarbodenfläche reflektierten und zuvor von der mindestens einen Lichtemittiereinheit emittierten sichtbaren Lichts und zum Messen von Echtfarbwerten des erfassten sichtbaren Lichts. Einem jeweiligen Breitenteilabschnitt ist mindestens einer, bevorzugt genau einer der Farbsensoren zugeordnet ist. Außerdem weist das landwirtschaftliche Gerät eine Auswerteeinheit auf, die ausgebildet ist zum Verarbeiten der gemessenen Echtfarbwerte, um die Agraroberfläche in der Bearbeitungsbreite zumindest teilweise bedeckende Unkrautpflanzen zu detektieren, und zum individuellen temporären Aktivieren einer jeweiligen Unkrautbehandlungsvorrichtung, in deren zugeordneten Breitenteilabschnitt mindestens eine Unkrautpflanze detektiert worden ist.

Zur Lösung der Aufgabe der vorliegenden Erfindung wird ein landwirtschaftliches Gerät vorgeschlagen, das mehrere Auswerteeinheiten zum Verarbeiten der gemessenen Echtfarbwerte aufweist. Für einen jeweiligen Breitenteilabschnitt ist genau eine jeweilige separate und diesem Breitenteilabschnitt zugeordnete Auswerteeinheit bereitgestellt. Die jeweilige Auswerteeinheit ist ausgebildet, auf Grundlage der in diesem Breitenteilabschnitt gemessenen Echtfarbwerte Unkrautpflanzen einer vorgegebenen Unkrautpflanzenart zu erkennen und als ein temporär gültiges Aktivierungskriterium für die diesem Breitenteilabschnitt zugeordnete Unkrautbehandlungsvorrichtung zu ermitteln, ob der Breitenteilabschnitt der jeweiligen Unkrautbehandlungsvorrichtung zu einem jeweiligen Zeitpunkt der Ermittlung und/oder während eines Ermittlungsintervalls zumindest zu einem vorgegebenen Mindestbedeckungsausmaß von der vorgegebenen Unkrautpflanzenart bedeckt ist, und die dem Breitenteilabschnitt zugeordnete Unkrautbehandlungsvorrichtung temporär zur gezielten Behandlung der erkannten Unkrautpflanzen der vorgegebenen Unkrautpflanzenart nur unter der Bedingung zu aktivieren, dass das für diesen Breitenteilabschnitt ermittelte Aktivierungskriterium gültig ist. Bei den Unkrautpflanzen einer vorgegebenen Unkrautpflanzenart handelt es sich bevorzugt um Durchwuchskartoffelpflanzen. Das Ermittlungsintervall ist ein Ermittlungsintervall einer vorgegebenen Zeitdauer und/oder einer vorgegebenen Fortbewegungsstrecke des Geräts. Das vorgegebene Mindestbedeckungsausmaß beträgt mindestens 30% des jeweiligen Breitenteilabschnitts. Bevorzugt beträgt das vorgegebene Mindestbedeckungsausmaß mindestens 40% des jeweiligen Breitenteilabschnitts. Besonders bevorzugt beträgt das vorgegebene Mindestbedeckungsausmaß mindestens 50% des jeweiligen Breitenteilabschnitts. Jede der Unkrautbehandlungsvorrichtungen ist derart ausgebildet, dass sie zu einem Zeitpunkt ihrer Aktivierung auf eine in dem Breitenteilabschnitt vorhandene Unkrautpflanze eine zumindest wachstumshemmende, bevorzugt aber abtötende Wirkung ausübt. Die Unkrautbehandlungsvorrichtungen sind bevorzugt zur thermischen Behandlung, insbesondere zum Abflammen, der erkannten Unkrautpflanzen in dem der jeweiligen Unkrautbehandlungsvorrichtung zugeordneten Breitenteilabschnitt ausgebildet.

Als Lösung der Aufgabe der vorliegenden Erfindung wird somit vorgeschlagen, dass jede der Auswerteeinheiten ausgebildet ist, nur Unkrautpflanzen einer vorgegebenen Unkrautpflanzenart zu erkennen und die der Auswerteeinheit zugeordnete Unkrautbehandlungsvorrichtung temporär zur wachstumshemmenden Behandlung, insbesondere zur Abtötung, der erkannten Unkrautpflanze(n) zu aktivieren, sofern zur selben Zeit zwei Bedingungen in dem der jeweiligen Auswerteeinheit zugeordneten Breitenteilabschnitt erfüllt sind.

Die erste Bedingung, die durch die jeweilige Auswerteeinheit geprüft wird, besteht darin, ob die mit dem Farbsensor in dem Breitenteilabschnitt gemessenen Echtfarbwerte sichtbaren Lichts mit für die zu erkennende Unkrautpflanzenart vorgegebenen Echtfarbwerten sichtbaren Lichts übereinstimmen, wobei ein eng gefasster Toleranzbereich vorgesehen sein kann. Jede Auswerteeinheit ist ausgebildet, den Vergleich der gemessenen Echtfarbwerte mit den vorgegebenen Echtfarbwerten gemäß der Farbwahrnehmung durch das menschliche Auge vorzunehmen. Folglich sind die Farbsensoren ausgebildet zum Messen der Echtfarbwerte von Unkrautpflanzen in dem gesamten Spektrum des sichtbaren Lichts von 380nm bis 780nm. Die Farbsensoren sind daher nicht als Sensoren zum Detektieren und/oder Messen eines von zu erkennenden Unkrautpflanzen reflektierten sichtbaren Lichts in einen maximal 100nm breiten Spektralbereich ausgebildet. Die Farbsensoren sind zudem nicht als Detektoren mit mindestens einem dedizierten Messkanal zum Detektieren mindestens eines Chlorophyll-Absorptionsbandes ausgebildet, um sensorbasiert bzw. detektorbasiert zwischen einer Pflanze und einer pflanzenfreien Agrarbodenfläche zu differenzieren.

Die zweite Bedingung, die durch die jeweilige Auswerteeinheit geprüft wird, besteht darin, dass der Breitenteilabschnitt zumindest zu einem vorgegebenen Mindestbedeckungsausmaß von der mindestens einen erkannten Unkrautpflanze der vorgegebenen Unkrautpflanzenart bedeckt bzw. belegt ist. Das vorgegebene Mindestbedeckungsausmaß ist relativ zu der Abmessung des jeweiligen Breitenteilabschnitts festgelegt. Wenn beispielsweise die Breitenteilabschnitte jeweils 10cm breit sind, dann ist die zweite Bedingung für einen Breitenteilabschnitt zu einem Zeitpunkt einer Ermittlung erfüllt, wenn bei diesem Zeitpunkt der Ermittlung die mindestens eine Unkrautpflanze der vorgegebenen Unkrautpflanzenart mindestens 30% des Breitenteilabschnitts der Agrarbodenfläche, also eine Breite von mindestens 3cm, bedeckt. Besonders bevorzugt erfordert das vorgegebene Mindestbedeckungsausmaß, dass zu einem Zeitpunkt der Ermittlung mindestens 50% des Breitenteilabschnitts der Agrarbodenfläche bedeckt sind.

Die vorgestellte Lösung ermöglicht eine sehr effiziente, zielgerechte und umweltbewusste Unkrautbehandlung auf einer Agrarbodenfläche. Mit der vorgestellten Lösung wird eine überflüssige Aktivierung der Unkrautbehandlungsvorrichtungen vermieden, da nur Unkrautpflanzen einer vorgegeben Unkrautpflanzenart ab einer vorgegebenen Mindestausbreitung behandelt bzw. abgetötet werden. Mit einer Ausbildung als thermische Unkrautbehandlungsvorrichtungen kann zudem jeder umweltproblematische Herbizideinsatz unterbleiben.

In einer Weiterbildung des vorgestellten Geräts ist vorgesehen, dass für jeden Breitenteilabschnitt der mindestens eine Farbsensor und die Auswerteeinheit, die demselben Breitenteilabschnitt zugeordnet sind, integral als ein Farbdetektor ausgebildet sind, so dass einem jeweiligen Breitenteilabschnitt ein jeweiliger Farbdetektor zugeordnet ist, der ausgebildet, ein zeitlich begrenztes Aktivierungssignal an die diesem Breitenteilabschnitt zugeordnete Unkrautbehandlungsvorrichtung für den Fall auszugeben, dass das durch die Auswerteeinheit des Farbdetektors ermittelte Aktivierungskriterium aktuell erfüllt ist.

In weiterer Ausgestaltung des vorgestellten Geräts ist vorgesehen, dass das landwirtschaftliche Gerät eine mit den Auswerteeinheiten datenkommunikationstechnisch gekoppelte Schnittstelleneinheit aufweist. Über diese Schnittstelleneinheit können von den Auswerteeinheiten durchführbare Prozesse zum Verarbeiten der gemessenen Echtfarbwerte und zum Erkennen der Unkrautpflanzen der vorgegebenen Unkrautpflanzenart in einem jeweiligen Breitenteilabschnitt konfiguriert und an ein Anwendungsszenario des landwirtschaftlichen Geräts, insbesondere an eine Art der auf der Agrarbodenfläche heranwachsenden Kulturpflanzen, eine Feuchtigkeit der Agrarbodenfläche, und/oder eine Feuchtigkeitsbenetzung der Unkrautpflanzen und/oder Kulturpflanzen, angepasst werden.

In einer Weiterbildung des vorgestellten Geräts ist vorgesehen, dass eine jeweilige Auswerteeinheit ausgebildet ist, das Aktivierungskriterium des vorgegebenen Mindestbedeckungsausmaßes für die zugeordnete Unkrautbehandlungsvorrichtung mittels Messung eines Intensitätswertes des in dem zugeordneten Breitenteilabschnitt erfassten sichtbaren Lichts und/oder mittels einer Ermittlung einer eindimensionalen Intensitätsverteilung des in dem zugeordneten Breitenteilabschnitt erfassten sichtbaren Lichts, insbesondere für einen vorgegebenen Echtfarbwert einer Grünfarbe, zu ermitteln.

In einer Weiterbildung des vorgestellten Geräts ist vorgesehen, dass das landwirtschaftliche Gerät ausgebildet ist, die Agrarbodenfläche in der Bearbeitungsbreite bedeckende Unkrautpflanzen ohne Verwendung von die Agrarbodenfläche repräsentierende Bild- und/oder Video-Kamera-Signalen zu erkennen. Außerdem ist vorgesehen, dass die Farbsensoren nicht als Bildsensor oder Kamerasensor zum Erfassen von mindestens zweidimensionalen Bildern der Agraroberfläche ausgebildet sind. Zudem ist vorgesehen, dass die Auswerteeinheiten ausgebildet sind, ohne eine Bildverarbeitung eines mindestens zweidimensionalen Bildes, ohne eine bild- und/oder videobasierte Objekterkennung und/oder ohne Mustererkennung Unkrautpflanzen der vorgegebenen Unkrautpflanzenart zu erkennen und das Aktivierungskriterium für eine jeweilige Unkrautbehandlungsvorrichtung zu ermitteln.

In einer Weiterbildung des vorgestellten Geräts ist vorgesehen, dass die Farbsensoren ausgebildet sind zum Messen oder Ermitteln von Echtfarbwerten in einem CIEL*a*b-Farbraum. Alternativ oder optional sind die Auswerteeinheiten ausgebildet, aus den von den Farbsensoren gemessenen Echtfarbwerten Echtfarbwerte in dem CIEL*a*b-Farbraum zu ermitteln. In dem CIEL*a*b-Farbraum, der auch als CIELab-Farbraum oder als CIELAB-Farbraum bezeichnet wird, sind die Echtfarbwerte durch die drei Größen Luminanz-Wert L, a-Wert und b-Wert spezifiziert und werden für die Auswertung durch die Auswerteeinheiten verwendet.

In einer Weiterbildung des vorgestellten Geräts ist vorgesehen, dass die Auswerteeinheiten ausgebildet sind, Unkrautpflanzen der vorgegebenen Art mittels Vergleich der mit den Farbsensoren gemessenen Echtfarbwerte und vorgegebener Echtfarbwerte in dem CIEL*a*b-Farbraum zu erkennen. Die in dem CIEL*a*b-Farbraum vorgegebenen Echtfarbwerte sind bevorzugt die Echtfarbwerte von auf einer Agrarbodenfläche wachsenden Durchwuchskartoffelpflanzen. In diesem Fall entsprechen die von den Auswerteeinheiten durchgeführten Farbvergleiche einer Prüfung von Unkrautpflanzen bezüglich ihrer Farbe, wie sie das menschliche Auge wahrnimmt .

In einer Weiterbildung des vorgestellten Geräts ist vorgesehen, dass die Farbsensoren nur zum Messen von Licht des sichtbaren Spektrums ausgebildet sind. Alternativ oder optional sind zudem die Auswerteeinheiten ausgebildet, Unkrautpflanzen der vorgegebenen Unkrautpflanzenart, die mittels ihrer Soll-Echtfarbwerte insbesondere als Durchwuchskartoffelpflanzen vorgegeben sind, nur auf Grundlage von Messwerten von Licht des sichtbaren Spektrums zu erkennen.

In einer Weiterbildung des vorgestellten Geräts ist vorgesehen, dass die Farbsensoren nicht ausgebildet sind zum Messen eines von der Agraroberfläche reflektierten Nahinfrarotlichts und/oder Ultraviolettlichts. Ferner sind die Auswerteeinheiten nicht ausgebildet zur Verarbeitung von Nahinfrarotlicht- und/oder Ultraviolettlicht-Messwerten.

In einer Weiterbildung des vorgestellten Geräts ist vorgesehen, dass das landwirtschaftliche Gerät mit mindestens einer Fremdlichtabschirmung zur Abschirmung der Lichtemittiereinheit und der Farbsensoren gegenüber Umgebungslicht versehen ist.

In einer Weiterbildung des vorgestellten Geräts ist vorgesehen, dass das landwirtschaftliche Gerät mindestens eine Gebläsevorrichtung und/oder Druckluftvorrichtung aufweist, die zum Wegblasen und/oder Absaugen von in den Bereichen der Lichtemittiereinheit und der Farbsensoren auftretender staubhaltiger Luft ausgebildet ist.

In einer Weiterbildung des vorgestellten Geräts ist vorgesehen, dass die Unkrautbehandlungsvorrichtungen jeweils als separate Abflammbrenner ausgebildet sind, die bei Aktivierung durch die zugeordnete Auswerteeinheit individuell zündbar sind, um in dem jeweiligen Breitenteilabschnitt erkannte Unkrautpflanzen abzuflammen.

In einer Fortbildung der letztgenannten Weiterbildung des vorgestellten Geräts ist zudem eine druckluftbasierte Kühlvorrichtung zum Kühlen der Farbsensoren vorgesehen. Alternativ oder optional ist eine thermische Isolierung zwischen den Farbsensoren und den Abflammbrennern vorgesehen.

In einer Weiterbildung des vorgestellten Geräts ist vorgesehen, dass das Gerät mindestens einen Abstandsmesssensor zum Messen eines Abstands der Farbsensoren zur Agrarbodenfläche aufweist oder mit mindestens einem Abstandsmesssensor koppelbar ist. Bevorzugt sind für mindestens zwei, besonders bevorzugt für sämtliche, der Breitenteilabschnitte individuelle Abstandsmesssensoren vorgesehen. Ferner sind die Auswerteeinheiten ausgebildet, die Erkennung von Unkrautpflanzen der vorgegebenen Art und/oder die Ermittlung des Aktivierungskriteriums abhängig von den gemessenen Abstandswerten durchzuführen.

In einer Weiterbildung des vorgestellten Geräts ist vorgesehen, dass die Auswerteeinheiten ausgebildet sind zur Verarbeitung eines Geschwindigkeitssignals eines Geschwindigkeitssensors zum Erfassen einer Fortbewegungsgeschwindigkeit des landwirtschaftlichen Geräts relativ zu der Agrarbodenoberfläche, um eine Aktivierungsverzögerung und/oder eine Aktivierungsdauer mindestens einer der zu aktivierenden und/oder aktivierten Unkrautbehandlungsvorrichtungen zu bestimmen.

In einer Weiterbildung des vorgestellten Geräts ist vorgesehen, dass die Farbsensoren schwenkbar an dem Gerät angebracht sind, um mittels Schwenkung, insbesondere um ca. 180 Grad, in eine Reinigungsposition gebracht werden zu können.

In einer Weiterbildung des vorgestellten Geräts ist vorgesehen, dass die Breitenteilabschnitte jeweils eine gleiche Breitenabmessung von weniger als 20cm, bevorzugt weniger als 15cm, besonders bevorzugt ungefähr 10cm aufweisen.

In einer Weiterbildung des vorgestellten Geräts ist vorgesehen, dass das landwirtschaftliche Gerät mindestens einen ausschwenkbaren und/oder ausfahrbaren Trägerarm aufweist, an dem zumindest einige der Farbsensoren und Unkrautbehandlungsvorrichtungen befestigt sind und durch Ausschwenken und/oder Ausfahren des mindestens einen Trägerarms in ihre vorgesehene Arbeitslage zur Erkennung und Behandlung von Unkrautpflanzen gebracht werden können.

In einer Weiterbildung des vorgestellten Geräts ist vorgesehen, dass das Gerät als abnehmbarer Einsatz oder Aufsatz für ein konventionelles Anbaugerät ausgebildet ist, welches zur Montage an einem Mehrzweckfahrzeug, insbesondere einem Traktor, vorgesehen ist.

In einer Weiterbildung des vorgestellten Geräts ist vorgesehen, dass das Gerät mindestens ein Sensormodul zur integrierten Aufnahme mehrerer Farbsensoren und diesen zugeordneter Auswerteeinheiten aufweist, so dass einem Sensormodul mehrere Breitenteilabschnitte zugeordnet sind.

In einer Fortbildung der letztgenannten Weiterbildung des vorgestellten Geräts ist vorgesehen, dass das mindestens eine Sensormodul an dem landwirtschaftlichen Gerät abnehmbar montiert ist, und dass das landwirtschaftliche Gerät ohne Sensormodul für eine andere agrartechnische Anwendung ausgebildet ist. Es wird bevorzugt, dass das landwirtschaftliche Gerät ohne Sensormodul für einen Sikkationseinsatz ausgebildet ist, bei dem kurz vor der Ernte der Nutzpflanzen einmalig und gezielt ein Totalherbizid auf die Agrarbodenfläche ausgebracht wird, um die Reifung der Nutzpflanzen bzw. ihrer Früchte gezielt zu beenden, so dass das Erntegut trocken und ohne Schimmelproblematik eingeholt werden kann.

Die Aufgabe der vorliegenden Erfindung wird auch durch ein Sensormodul gelöst, das für die oben dargestellte Weiterbildung und Fortbildung des vorgestellten landwirtschaftlichen Geräts vorgesehen ist.

Außerdem wird die Aufgabe der vorliegenden Erfindung durch einen Farbdetektor gelöst, der für die zuerst beschriebene Weiterbildung des vorgestellten landwirtschaftlichen Geräts vorgesehen ist. Der Farbdetektor ist ausgebildet, Echtfarben von eine Agrarbodenfläche zumindest teilweise bedeckenden Unkrautpflanzen zu messen, eine jeweilige bezüglich der Echtfarben gemessene Unkrautpflanze als eine zu einer vorgegebenen Unkrautpflanzenart zugehörige Unkrautpflanze nur unter den gleichzeitig zu erfüllenden Bedingungen zu erkennen, dass die gemessene Echtfarbe mit für die zu erkennende Unkrautpflanzenart vorgegebenen Echtfarbwerten aus dem CIEL*a*b-Farbraum übereinstimmt, und dass in einem dem Farbdetektor zugeordneten Breitenteilabschnitt der Agrarbodenfläche ein vorgegebenes Mindestbedeckungsausmaß von der vorgegebenen Unkrautpflanzenart bedeckt ist, wobei das vorgegebene Mindestbedeckungsausmaß mindestens 30%, bevorzugt 40%, besonders bevorzugt 50%, des Breitenteilabschnitts beträgt. Ferner ist der Farbdetektor ausgebildet, nur in dem Fall mindestens einer erkannten Unkrautpflanze ein zeitlich begrenztes Aktivierungssignal für einen mit dem Farbdetektor elektrisch koppelbaren und als Unkrautbehandlungsvorrichtung ausgebildeten Abflammbrenner auszugeben.

In einer Weiterbildung des Farbdetektors ist vorgesehen, dass der Farbdetektor ausgebildet ist, als die für die zu erkennende Unkrautpflanzenart vorgegebenen Echtfarbwerte aus dem CIEL*a*b-Farbraum Echtfarbwerte von auf einer Agrarbodenfläche wachsenden Durchwuchskartoffelpflanzen zu verwenden.

Die Merkmale des oben vorgestellten Geräts, des oben vorgestellten Sensormoduls und des oben vorgestellten Farbdetektors können im Sinne der Erfindung beliebig miteinander kombiniert werden, sofern eine derartige Kombination nicht offensichtlich widersprüchlich ist. Merkmale der Ansprüche, denen die Wörter "insbesondere" und "bevorzugt" zugeordnet sind, sind als fakultativ und nicht beschränkend zu verstehen und dienen der Spezifizierung besonders vorteilhafter Ausführungsbeispiele der vorliegenden Erfindung.

### Kurze Beschreibung der Zeichnungen

Zur Verdeutlichung des vorgestellten Geräts, des vorgestellten Sensormodus und des vorgestellten Farbdetektors werden nun Ausführungsbeispiele mit Verweis auf die folgenden Figuren vorgestellt.
- Fig. 1: veranschaulicht schematisch ein landwirtschaftliches Gerät gemäß einem Ausführungsbeispiel der Erfindung;
- Fig. 2: veranschaulicht schematisch ein landwirtschaftliches Gerät gemäß einem weiteren Ausführungsbeispiel der Erfindung;
- Fig. 3: zeigt eine vergrößerte Ansicht eines Abschnitts des in Fig. 2 veranschaulichten Geräts zur Verdeutlichung von für den Farbdetektor vorgesehenen Zusatzeinrichtungen;
- Fig. 4: zeigt eine schematische Rückansicht eines landwirtschaftlichen Geräts mit ausschwenkbaren Trägerarmen im eingeschwenkten Zustand gemäß noch einem weiteren Ausführungsbeispiel der Erfindung; und
- Fig. 5: zeigt eine schematische Draufsicht des landwirtschaftlichen Geräts von Fig. 4 in normalen Betriebszustand mit ausgeschwenkten Trägerarmen gemäß noch einem weiteren Ausführungsbeispiel der Erfindung.

In den angeführten Figuren sind identische oder ähnliche Elemente, Komponenten, Werte und Intervalle figurenübergreifend mit denselben Bezugszeichen bezeichnet.

### Ausführungsbeispiele der Erfindung

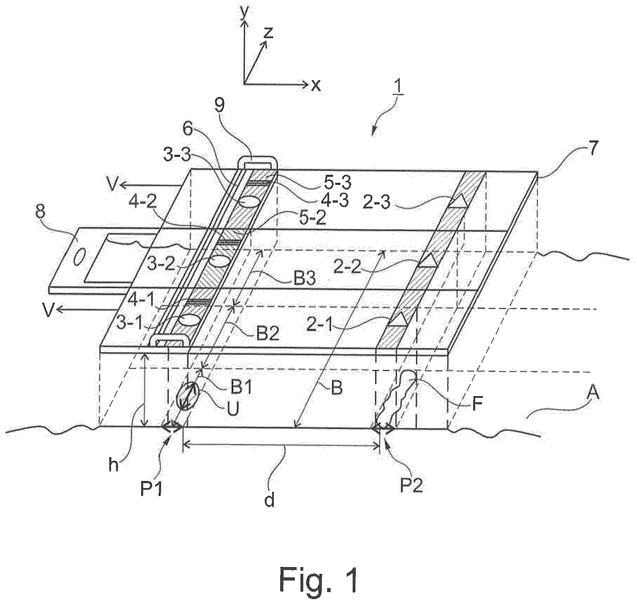

Fig. 1 veranschaulicht schematisch ein landwirtschaftliches Gerät gemäß einem Ausführungsbeispiel der Erfindung. Das in seiner Gesamtheit mit 1 bezeichnete landwirtschaftliche Gerät 1 gemäß Fig.1 ist mit einem Abstand h über einer Agrarbodenfläche A angeordnet bzw. über diese hinweg bewegbar. Das Gerät 1 ermöglicht eine Erkennung und Behandlung von Unkrautpflanzen U, die in dem Agrarboden wachsen und die Agrarbodenfläche A zumindest teilweise bedecken, in einer Bearbeitungsbreite B, die sich in einer Querrichtung des Geräts 1 erstreckt und in Fig. 1 entlang einer z-Richtung eines dreidimensionalen Koordinatensystems mit den Achsen x, y, und z veranschaulicht ist. Die gesamte Bearbeitungsbreite B ist in nebeneinander benachbart angeordnete Breitenteilabschnitte B1, B2, B3 unterteilt und wird durch die Gesamtheit der Breitenteilabschnitte B1, B2, B3 definiert bzw. aufgespannt. Die geringe Anzahl von drei Breitenteilabschnitten ist nur aus Gründen einer vereinfachten Erläuterung gewählt.

Das Gerät 1 weist mehrere Unkrautbehandlungsvorrichtungen 2-1, 2-2, 2-3, mehrere lichtsensitive Farbsensoren 3-1, 3-2, 3-3, mehrere Auswerteeinheiten 4-1, 4-2, 4-3 und eine Lichtemittiereinheit 6 auf, die an einem Gestell 7 des Geräts 1 montiert sind. An einem vorderen Ende des Geräts 1 ist das Gestell 7 mit einer Kupplungseinrichtung 8 versehen, mit der das Gerät 1 an ein Zugfahrzeug angekuppelt werden kann, um von dem Zugfahrzeug mit einer Fortbewegungsgeschwindigkeit v relativ zu der Agrarbodenfläche A entlang einer Vorwärtsrichtung, in Fig. 1 in negativer x-Richtung dargestellt, bewegt zu werden. Für einen jeweiligen Breitenteilabschnitt Bx (mit x=1, 2 oder 3) der Breitenteilabschnitte B1, B2, B3 sind eine jeweilige Unkrautbehandlungsvorrichtung 2-1, 2-2 bzw. 2-3, ein jeweiliger lichtsensitiver Farbsensor 3-1, 3-2 bzw. 3-3 und eine jeweilige Auswerteeinheit 4-1, 4-2 bzw. 4-3 vorgesehen. Eine jeweilige Unkrautbehandlungsvorrichtung 2-x, ein jeweiliger Farbsensor 3-x und eine jeweilige Auswerteeinheit 4-x ist somit genau einem Breitenteilabschnitt Bx zugeordnet und umgekehrt.

Jeder der Farbsensoren 3-x ist ausgebildet zum Erfassen von sichtbarem Licht, das von einem in Fig. 1 nicht veranschaulichten Erfassungsgebiet der Agrarbodenfläche A in Richtung des Farbsensors 3-x reflektiert worden ist. Das Erfassungsgebiet eines jeweiligen Farbsensors 3-x erstreckt sich über die gesamte Breite des dem Farbsensor 3-x zugeordneten Breitenteilabschnitts Bx. Die Erfassungsgebiete aller Farbsensoren 3 haben bevorzugt jeweils eine linienartige Form, die sich in der Querrichtung bzw. der z-Achse des Geräts 1 erstreckt, wie in Fig. 1 durch die Pfeile B1, B2, B3 dargestellt, die in Fig. 1 eigentlich den Breitenteilabschnitten B-x selbst zugeordnet sind. Zur Realisierung eines derart linienartig ausgebildeten Erfassungsgebietes kann der jeweilige Farbsensor mit einer Linienoptiklinse ausgerüstet sein. Jeder der Farbsensoren 3-x ist ferner ausgebildet zum Messen von Echtfarbwerten des erfassten Lichts und zum Ausgeben der gemessenen Echtfarbwerte an die ihm zugeordnete Auswerteeinheit 4-x. In dem Ausführungsbeispiel sind die Farbsensoren 3-x ausgebildet, die Echtfarbwerte als Echtfarbwerte in dem oben beschriebenen CIEL*a*b-Farbraum zu messen bzw. zu ermitteln und als gemessene Echtfarbwerte an die zugeordnete Auswerteeinheit 4-x auszugeben.

Für jeden Breitenabschnitt B-x ist eine jeweilige Auswerteeinheit 4-x bereitgestellt, die ausgebildet ist, von dem ihr zugeordneten Farbsensor 3-x gemessene Echtfarbwerte als Daten zu empfangen und zu verarbeiten. Ferner ist die jeweilige Auswerteeinheit 4-x ausgebildet, auf Grundlage in dem zugeordneten Breitenteilabschnitt Bx gemessener Echtfarbwerte in dem Breitenteilabschnitt Bx möglicherweise vorhandene Unkrautpflanzen U einer vorgegebenen Unkrautpflanzenart zu erkennen. In dem Ausführungsbeispiel ist jede Auswerteeinheit 4-x ausgebildet, Unkrautpflanzen U der vorgegebenen Unkrautpflanzenart durch einen Vergleich der von dem Farbsensor 3-x gemessenen Echtfarbwerte in dem CIEL*a*b-Farbraum mit vorgegebenen Echtfarbwerten zu erkennen. Dabei sind die vorgegebenen Echtfarbwerte als Echtfarbwerte in dem CIEL*a*b-Farbraum vorgegeben. In einem bevorzugten Ausführungsbeispiel handelt es sich um die Echtfarbwerte von Durchwuchskartoffelpflanzen, die auf einem Agrarboden wachsen und die Agrarbodenfläche zumindest teilweise bedecken. Jede Auswerteeinheit 4-x ist mit anderen Worten derart ausgebildet, dass sie eine Unkrautpflanze als eine Durchwuchskartoffelpflanze und somit als eine Unkrautpflanze der vorgegebenen Unkrautpflanzenart erkennt, falls die Echtfarbwerte des CIEL*a*b-Farbraums, die der Farbsensor 3-x zu einem Zeitpunkt in seinem Erfassungsgebiet seines Breitenteilabschnitts mittels Messung ermittelt hat, mit den für Durchwuchskartoffelpflanzen charakteristischen Echtfarbwerten des CIEL*a*b-Farbraums übereinstimmen. Für den Fall, dass die Auswerteeinheit 4-x mittels Vergleich der Echtfarbwerte in dem CIEL*a*b-Farbraum mindestens eine Durchwuchskartoffelpflanze in dem Breitenteilabschnitt Bx erkannt hat, ermittelt die Auswerteeinheit 4-x als ein temporär gültiges Aktivierungskriterium für die der Auswerteeinheit 4-x zugeordnete Unkrautbehandlungsvorrichtung 2-x, ob oder ob nicht die mindestens eine Durchwuchskartoffelpflanze U den Breitenteilabschnitt Bx zu einem Zeitpunkt der Ermittlung zumindest zu einem vorgegebenen Mindestbedeckungsausmaß von 50% des Breitenteilabschnitts Bx bedeckt. Nur für den Fall, dass die mindestens eine anhand des Farbvergleichs erkannte Durchwuchskartoffelpflanze zu dem Zeitpunkt der Ermittlung mindestens 50% des Breitenteilabschnitts bedeckt, aktiviert die Auswerteeinheit 4-x die Unkrautbehandlungsvorrichtung 2-x temporär, so dass die mindestens eine erkannte Durchwuchskartoffelpflanze sehr effizient und gezielt behandelt werden kann.

In dem Ausführungsbeispiel von Fig. 1 sind der jeweilige Farbsensor 3-x und die jeweilige Auswerteeinheit 4-x, die für denselben Breitenteilabschnitt Bx vorgesehen sind, integral als ein einzelner Farbdetektor 5-x ausgebildet. Der Farbdetektor 5-x des Breitenteilabschnitts Bx ist mit einem Signalausgang versehen, über den im Fall des erfüllten Aktivierungskriteriums ein temporär gültiges Aktivierungssignal an die Unkrautbehandlungsvorrichtung 2-x ausgegeben werden kann.

Zudem ist in dem Ausführungsbeispiel von Fig. 1 das Gerät 1 mit einem Sensormodul 9 versehen, in dem sämtliche der Farbdetektoren 5-1, 5-2, 5-3 integriert aufgenommen sind. Auch die Lichtemittiereinheit 6 ist in das Sensormodul 9 integriert. Das Sensormodul 9 ist an dem Gerät 1 derart montiert, dass ein Benutzer das Sensormodul 9 ohne großen Aufwand von dem Gerät 1 beispielsweise für Reinigungs- oder Wartungszwecke abnehmen bzw. entfernen kann.

In dem Ausführungsbeispiel von Fig. 1 sind sämtliche der Unkrautbehandlungsvorrichtungen 2-x als Abflammbrenner und somit zur thermischen Behandlung von Unkrautpflanzen ausgebildet. Die Abflammbrenner 2-x sind ausgebildet zur Verbrennung eines Fluids oder eines Gases, welches in einem in Fig. 1 nicht gezeigten Behälter des Geräts 1 gespeichert ist und über in Fig. 1 ebenfalls nicht gezeigte Leitungen den Abflammbrennern 2-1, 2-2, 2-3 beispielsweise durch eine Pumpe zugeführt wird. Wenn die Auswerteeinheit 4-x eine ausreichend großflächige Unkrautpflanze der vorgegebenen Unkrautpflanze, also in dem Ausführungsbeispiel eine oder mehrere mindestens 50% des Breitenteilabschnitts Bx bedeckende Durchwuchskartoffelpflanze(n), erkannt hat, aktiviert die Auswerteeinheit 4-x die als Abflammbrenner ausgebildete Unkrautbehandlungsvorrichtung 2-x mittels gesteuerter Öffnung eines Ventils für den Durchtritt des Fluids oder Gases aus einer Düse des Abflammbrenners und aktiviert einen Piezozünder, so dass der Abflammbrenner 2-x temporär eine Flamme F auf die erkannte(n) und abzuflammende(n) Unkrautpflanze(n) U richtet, um die Unkrautpflanze(n) thermisch abzutöten. Aufgrund der hohen Temperaturen der erzeugten Flamme von bis zu 1900 Grad Celsius und damit verbundener starker Wärmeenergieabstrahlung ist der jeweilige Abflammbrenner 2-x in einem ausreichend großen Abstand d von dem Farbsensor 3-x bzw. Farbdetektor 5-x angeordnet.

Unter Kenntnis des festen Abstands d und einer Information über die aktuelle Fortbewegungsgeschwindigkeit v des Geräts 1 relativ zu der Agrarfläche A, beispielsweise von einem Geschwindigkeitssensor oder einem GPS-basierten Ortungssensor gemessen, kann die Auswerteeinheit 4-x exakt den Zeitpunkt ermitteln, wann der in der vorgesehenen Fortbewegungsrichtung des Geräts 1 hinter dem Farbsensor 3-x angeordnete Abflammbrenner 2-x, der sich zum Zeitpunkt der Erkennung der Unkrautpflanze(n) U noch in Position P2 befindet, die Position P1 der erkannten Unkrautpflanze(n) in dem Breitenteilabschnitt Bx erreichen wird. Zu dem ermittelten Zeitpunkt aktiviert die Auswerteeinheit 4-x dann den Abflammbrenner 2-x, um durch Erzeugung einer Flamme F an der Position P1 die Unkrautpflanze(n) thermisch abzutöten. Es kann vorgesehen sein, dass die Auswerteeinheit 4-x eine Intensität und/oder Größe der zu erzeugenden Flamme in Abhängigkeit von einer ermittelten breiten- oder flächenmäßigen Größe der erkannten Unkrautpflanze(n) bestimmt.

Um eine exakte Erkennung der Unkrautpflanzen der vorgegebenen Unkrautpflanzenart und eine exakte Positionierung der mit dem Abflammbrenner 2-x zu erzeugenden Flamme F zu gewährleisten, kann zudem vorgesehen sein, dass die Höhe h zwischen dem Gerät 1, genauer genommen den Farbsensoren 3-x, und der Agrarbodenfläche 1 mittels mindestens einem an dem Gerät 1 angebrachten Abstandsmesssensor (in Fig. 1 nicht abgebildet) fortlaufend gemessen wird und von den Auswerteeinheiten 4-x bei der Verarbeitung der Messwerte und für die Aktivierung des Abflammbrenners 2-x geeignet verwendet wird. Es kann auch für jeden Breitenteilabschnitt Bx ein separater Abstandsmesssensor zur Ermittlung des Abstands des Farbsensors 3-x zu der Agrarbodenfläche vorgesehen sein. Basierend auf dem fortlaufend gemessenen Abstand h zwischen dem Gerät 1 bzw. den Farbsensoren 3-x und der Agrarbodenfläche A kann zudem eine automatische Höhenregelung vorgesehen sein, bei der das Gerät 1 durch einen gesteuerten, hydraulisch angetriebenen Tragarm, beispielsweise des Zugfahrzeugs, fortlaufend einen vorgegebenen Abstand zu der Agrarbodenfläche beibehält.

In dem mit Verweis auf Fig. 1 beschriebenen Ausführungsbeispiel des Geräts 1 sind die Farbsensoren 3-x nicht zur Erfassung oder Messung spektraler Lichtanteile im Nahinfrarot- und/oder Ultraviolettbereich ausgebildet. Die Farbsensoren 3-x sind auch nicht als dedizierte Sensoren zum Ermitteln oder Messen von Chlorophyll-Absorptionsspektren ausgebildet. Ferner sind die Farbsensoren 3-x nicht als Bild- und/oder Video-Kamera-Sensoren zum Aufzeichnen, zu einem Aufnahmezeitpunkt, eines mindestens zweidimensionalen, aus Bildpunkten zusammengesetzten Bildes der Agraroberfläche A ausgebildet. Dem entsprechend sind die Auswerteeinheiten 4-x nicht ausgebildet zur Bild- und/oder Videoverarbeitung, Objekterkennung oder Mustererkennung.

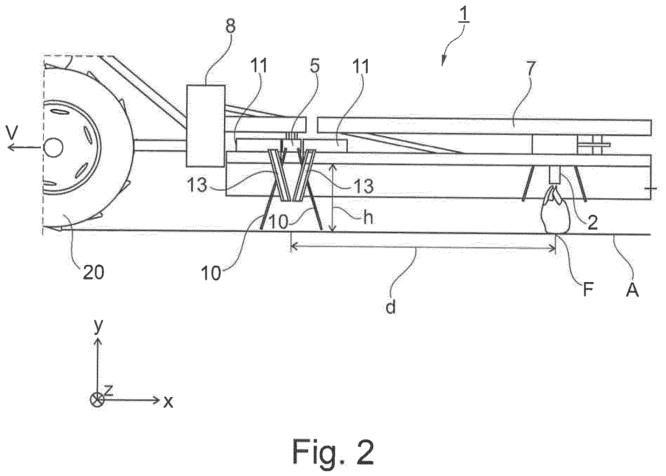

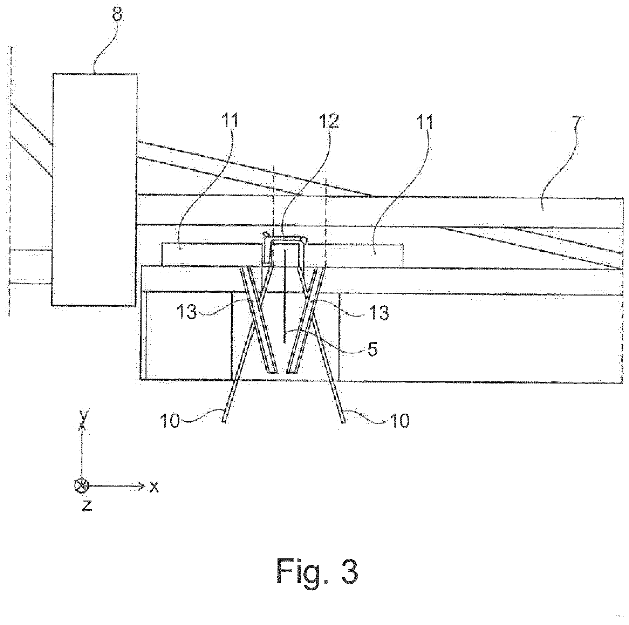

Fig. 2 veranschaulicht schematisch ein landwirtschaftliches Gerät gemäß einem weiteren Ausführungsbeispiel der Erfindung. In Fig. 3 ist eine vergrößerte Ansicht eines Abschnitts des in Fig. 2 gezeigten Geräts zur Verdeutlichung von für den Farbdetektor vorgesehenen Zusatzeinrichtungen abgebildet. Das in Fig. 2 und Fig. 3 dargestellte Gerät ist ähnlich wie das zuvor mit Verweis auf Fig. 1 beschriebene Gerät 1 aufgebaut und ist an einem Zugfahrzeug 20 montiert. Aus Gründen der Vereinfachung sind die real in einer Mehrzahl vorhandenen Farbdetektoren 5-x und Unkrautbehandlungsvorrichtungen 2-x in Fig. 2 und Fig. 3 nur in einfacher Stückzahl dargestellt.

Die Echtfarbwerte zu erkennender Unkrautpflanzen können besonders exakt gemessen werden, wenn nur das von der Lichtemittiereinheit emittierte Licht nach einer Reflektion an der Agrarbodenfläche und kein Fremdlicht, insbesondere keine starke Sonnenstrahlung, aus der Umgebung auf den Farbsensor 3 auftrifft. Deshalb ist bei dem in Fig. 2 und Fig. 3 veranschaulichten Gerät 1 eine Fremdlichtabschirmung 10 vorgesehen, die sich von dem mit einem Abstand h zu der Agrarbodenfläche A angeordneten Farbdetekor 5 bis zu der Agrarbodenfläche A erstreckt. Diese Fremdlichtabschirmung 10 stellt zudem eine rudimentäre Abschottung des Erfassungsgebiets des Farbdetektors vor der möglicherweise staubigen Umgebungsluft bereit.

Zur weiteren Minderung des Staubgehalts der Luft in dem Erfassungsgebiet des Farbdetektors 5 sind zudem von Druckluftspeichern 11 gespeiste Druckluftkanäle 13 an dem Gerät 1 bereitgestellt, aus denen Druckluft ausströmt. Die ausströmende Druckluft ersetzt in der näheren Umgebung des Farbdetektors die staubhaltige Luft, so dass der Staubgehalt in der näheren Umgebung des Farbdetektors 5 reduziert wird. Außerdem bewirkt die gerichtet ausströmende Druckluft eine Abschirmung für von außen möglicherweise nachströmende staubhaltige Luft. Die Druckluftspeicher 11 können von einem nicht veranschaulichten Kompressor mit Druckluft gespeist werden, der beispielsweise durch eine Abtriebswelle des Zugfahrzeugs 20 angetrieben wird.

Außerdem kann an dem Gerät 1 zur Kühlung der Farbsensoren 3 bzw. Farbdetektoren 5 vor der durch die Abflammbrenner erzeugten Hitze eine Druckluft-Kühlvorrichtung vorgesehen sein, die ausgebildet ist, die Farbsensoren 3 bzw. Farbdetektoren 5 mittels Zuführung von Druckluft zu kühlen. Die für die Kühlung vorgesehene Druckluft kann durch die Druckluftspeicher 11 bereitgestellt werden.

Ferner ist das in Fig. 2 und Fig. 3 veranschaulichte Gerät 1 mit einer schwenkbaren bzw. klappbaren Schutzabdeckung 12 für den Farbdetektor 5 versehen. Nur im ausgeschwenkten bzw. aufgeklappten Zustand der Schutzabdeckung 12 ist der Farbdetektor von oben beispielsweise zur Reinigung direkt zugänglich. Es kann auch vorgesehen sein, dass der Farbdetektor 5 zusammen mit der Schutzabdeckung 12 schwenkbar ist, so dass durch eine Schwenkung des Farbdetektors 5 um ca. 180 Grad, dessen Unterseite, die im Normalbetrieb einer Verschmutzung durch den Agrarboden ausgesetzt ist, aber für eine exakte Echtfarbmessung möglichst sauber sein sollte, an die Oberseite des Geräts 1 gebracht und somit leicht gereinigt werden kann.

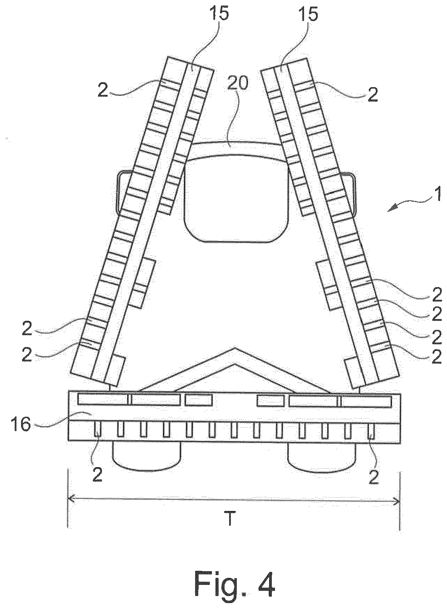

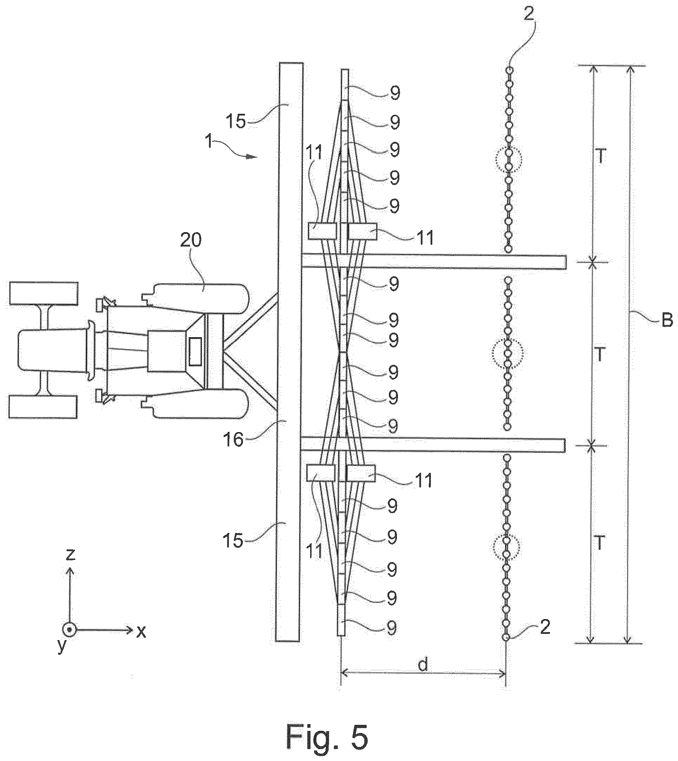

Fig. 4 zeigt eine schematische Rückansicht eines landwirtschaftlichen Geräts mit ausschwenkbaren Trägerarmen im eingeschwenkten Zustand gemäß noch einem weiteren Ausführungsbeispiel der Erfindung. Das an einem Zugfahrzeug 20 angebrachte Gerät 1 hat einen Grundträger 16, an dessen beiden seitlichen Enden Trägerarme 15 ausschwenkbar befestigt sind. An dem Grundträger 16 und an beiden Trägerarmen sind jeweils eine Mehrzahl von Farbdetektoren 5 und eine Mehrzahl von Abflammbrennern 2 montiert. In dem in Fig. 4 dargestellten Zustand sind die Trägerarme 15 für einen Straßentransport des Geräts 1 ähnlich anlegten Flügeln nach oben eingeschwenkt. Fig. 5 zeigt hingegen eine Draufsicht auf das Zugfahrzeug und das Gerät 1 mit ausgeschwenkten Trägerarmen. Der Grundträger 16 und beide Trägerarme 15 stellen zusammen drei Segmente mit einer jeweiligen Teilbearbeitungsbreite T von 2,90m dar. Die gesamte Bearbeitungsbreite B des Geräts ergibt sich folglich als das Dreifache der Segmentbearbeitungsbreite T und beträgt näherungsweise 9m. Die in Fig. 5 aus Gründen der Übersichtlichkeit nicht detailliert dargestellten, insgesamt 90 Breitenteilabschnitte Bx, also B1 bis B90, weisen eine jeweilige Breite von 10cm auf. Das Gerät ist mit 90 als Abflammdüsen ausgestalteten Unkrautbehandlungsvorrichtungen 2 versehen, die gemäß der Breite der Breitenteilabschnitte Bx jeweils einen Abstand von 10cm zueinander haben. Der Grundträger 16 und beide Trägerarme 15 sind jeweils mit sechs zueinander benachbart angeordneten Sensormodulen 9 versehen. Jedes Sensormodul 9 erstreckt sich über sechs Breitenteilabschnitte Bx und enthält insgesamt sechs Farbdetektoren, so dass jedem Breitenteilabschnitt genau ein Farbdetektor zugeordnet ist.

## Patentansprüche

1. Landwirtschaftliches Gerät (1) zur automatischen Erkennung und Behandlung von eine Agrarbodenfläche (A) bedeckenden Unkrautpflanzen (U), mit:
- mehreren, individuell temporär aktivierbaren Unkrautbehandlungsvorrichtungen (2, 2-1, 2-2, 2-3) zur Behandlung von Unkrautpflanzen (U) in einem jeweiligen Breitenteilabschnitt (B1, B2, B3) einer durch die Breitenteilabschnitte definierten gesamten Bearbeitungsbreite (B) des landwirtschaftlichen Geräts, wobei einem jeweiligen Breitenteilabschnitt (B1, B2, B3) mindestens eine, bevorzugt genau eine, der Unkrautbehandlungsvorrichtungen (2, 2-1, 2-2, 2-3) zugeordnet ist;
- mindestens einer Lichtemittiereinheit (6) zum Emittieren von sichtbarem, insbesondere weißem, Licht in Richtung der Agrarbodenfläche (A) über die gesamte Bearbeitungsbreite (B);
- mehreren lichtsensitiven Farbsensoren (3, 3-1, 3-2, 3-3) zum Erfassen des in den Breitenteilabschnitten (B1, B2, B3) reflektierten und zuvor von der mindestens einen Lichtemittiereinheit (6) emittierten sichtbaren Lichts und zum Messen von Echtfarbwerten des erfassten sichtbaren Lichts, wobei einem jeweiligen Breitenteilabschnitt (B1, B2, B3) mindestens einer, bevorzugt genau einer, der Farbsensoren (3, 3-1, 3-2, 3-3) zugeordnet ist; und
- einer Auswerteeinheit (4), die ausgebildet ist zum Verarbeiten der gemessenen Echtfarbwerte, um die Agraroberfläche in der Bearbeitungsbreite (B) zumindest teilweise bedeckende Unkrautpflanzen (U) zu detektieren, und zum individuellen temporären Aktivieren einer jeweiligen Unkrautbehandlungsvorrichtung (2, 2-1, 2-2, 2-3), in deren zugeordneten Breitenteilabschnitt (B1, B2, B3) mindestens eine Unkrautpflanze (U) detektiert worden ist,
**dadurch gekennzeichnet, dass** das landwirtschaftliche Gerät (1) mehrere Auswerteeinheiten (4, 4-1, 4-2, 4-3) zum Verarbeiten der gemessenen Echtfarbwerte aufweist, wobei für einen jeweiligen Breitenteilabschnitt (B1, B2, B3) genau eine jeweilige separate und diesem Breitenteilabschnitt (B1, B2, B3) zugeordnete Auswerteeinheit (4, 4-1, 4-2, 4-3) bereitgestellt ist, die ausgebildet ist, auf Grundlage der in diesem Breitenteilabschnitt (B1, B2, B3) gemessenen Echtfarbwerte Unkrautpflanzen (U) einer vorgegebenen Unkrautpflanzenart, insbesondere Durchwuchskartoffelpflanzen, zu erkennen und als ein temporär gültiges Aktivierungskriterium für die diesem Breitenteilabschnitt (B1, B2, B3) zugeordnete Unkrautbehandlungsvorrichtung (2, 2-1, 2-2, 2-3) zu ermitteln, ob der Breitenteilabschnitt (B1, B2, B3) der jeweiligen Unkrautbehandlungsvorrichtung (2, 2-1, 2-2, 2-3) zu einem jeweiligen Zeitpunkt der Ermittlung und/oder während eines Ermittlungsintervalls einer vorgegebenen Zeitdauer und/oder einer vorgegebenen Fortbewegungsstrecke des Geräts (1) zumindest zu einem vorgegebenen Mindestbedeckungsausmaß von der vorgegebenen Unkrautpflanzenart bedeckt ist, wobei das vorgegebene Mindestbedeckungsausmaß mindestens 30%, bevorzugt mindestens 40%, besonders bevorzugt mindestens 50%, des jeweiligen Breitenteilabschnitts (B1, B2, B3) beträgt, und die dem Breitenteilabschnitt (B1, B2, B3) zugeordnete Unkrautbehandlungsvorrichtung (2, 2-1, 2-2, 2-3) temporär zur, insbesondere thermischen, gezielten Behandlung der erkannten Unkrautpflanzen (U) der vorgegebenen Unkrautpflanzenart nur unter der Bedingung zu aktivieren, dass das für diesen Breitenteilabschnitt (B1, B2, B3) ermittelte Aktivierungskriterium gültig ist.

2. Landwirtschaftliches Gerät (1) nach Anspruch 1, **dadurch gekennzeichnet, dass** für jeden Breitenteilabschnitt (B1, B2, B3) der mindestens eine Farbsensor (3, 3-1, 3-2, 3-3) und die Auswerteeinheit (4, 4-1, 4-2, 4-3), die demselben Breitenteilabschnitt (B1, B2, B3) zugeordnet sind, integral als ein Farbdetektor (5, 5-1, 5-2, 5-3) ausgebildet sind, so dass einem jeweiligen Breitenteilabschnitt (B1, B2, B3) ein, bevorzugt genau ein, jeweiliger Farbdetektor (5, 5-1, 5-2, 5-3) zugeordnet ist, der ausgebildet ist, ein zeitlich begrenztes Aktivierungssignal an die diesem Breitenteilabschnitt (B1, B2, B3) zugeordnete Unkrautbehandlungsvorrichtung (2, 2-1, 2-2, 2-3) für den Fall auszugeben, dass das durch die Auswerteeinheit (4, 4-1, 4-2, 4-3) des Farbdetektors (5, 5-1, 5-2, 5-3) ermittelte Aktivierungskriterium aktuell erfüllt ist.

3. Landwirtschaftliches Gerät (1) nach Anspruch 1 oder 2, **dadurch gekennzeichnet, dass** das landwirtschaftliche Gerät eine mit den Auswerteeinheiten (4, 4-1, 4-2, 4-3) datenkommunikationstechnisch gekoppelte Schnittstelleneinheit aufweist, über welche von den Auswerteeinheiten (4, 4-1, 4-2, 4-3) durchführbare Prozesse zum Verarbeiten der gemessenen Echtfarbwerte und zum Erkennen der Unkrautpflanzen (U) der vorgegebenen Unkrautpflanzenart in einem jeweiligen Breitenteilabschnitt (B1, B2, B3) konfiguriert und an ein Anwendungsszenario des landwirtschaftlichen Geräts, insbesondere an eine Art der auf der Agrarbodenfläche heranwachsenden Kulturpflanzen, eine Feuchtigkeit der Agrarbodenfläche, und/oder eine Feuchtigkeitsbenetzung der Unkrautpflanzen und/oder Kulturpflanzen, angepasst werden können.

4. Landwirtschaftliches Gerät (1) nach einem der vorherigen Ansprüche, **dadurch gekennzeichnet, dass** eine jeweilige Auswerteeinheit (4, 4-1, 4-2, 4-3) ausgebildet ist, das Aktivierungskriterium des vorgegebenen Mindestbedeckungsausmaßes für die zugeordnete Unkrautbehandlungsvorrichtung (2, 2-1, 2-2, 2-3) mittels Messung eines Intensitätswertes des in dem zugeordneten Breitenteilabschnitt (B1, B2, B3) erfassten sichtbaren Lichts und/oder mittels einer Ermittlung einer eindimensionalen Intensitätsverteilung des in dem zugeordneten Breitenteilabschnitt (B1, B2, B3) erfassten sichtbaren Lichts, insbesondere für einen vorgegebenen Echtfarbwert einer Grünfarbe, zu ermitteln.

5. Landwirtschaftliches Gerät (1) nach einem der vorherigen Ansprüche, **dadurch gekennzeichnet, dass** das landwirtschaftliche Gerät ausgebildet ist, die Agrarbodenfläche (A) in der Bearbeitungsbreite (B) bedeckende Unkrautpflanzen (U) ohne Verwendung von die Agrarbodenfläche (A) repräsentierende Bild- und/oder Video-Kamera-Signalen zu erkennen, dass die Farbsensoren (3, 3-1, 3-2, 3-3) nicht als Bildsensor oder Kamerasensor zum Erfassen von mindestens zweidimensionalen Bildern der Agraroberfläche (A) ausgebildet sind, und dass die Auswerteeinheiten (4, 4-1, 4-2, 4-3) ausgebildet sind, ohne eine Bildverarbeitung eines mindestens zweidimensionalen Bildes, ohne eine bild- und/oder videobasierte Objekterkennung und/oder ohne Mustererkennung Unkrautpflanzen (U) der vorgegebenen Unkrautpflanzenart zu erkennen und das Aktivierungskriterium für eine jeweilige Unkrautbehandlungsvorrichtung (2, 2-1, 2-2, 2-3) zu ermitteln.

6. Landwirtschaftliches Gerät (1) nach einem der vorherigen Ansprüche, **dadurch gekennzeichnet, dass** die Farbsensoren (3, 3-1, 3-2, 3-3) ausgebildet sind zum Messen oder Ermitteln von Echtfarbwerten in einem CIEL*a*b-Farbraum, wobei die Echtfarbwerte durch die drei Größen Luminanz-Wert L, a-Wert und b-Wert für die Auswertung durch die Auswerteeinheiten spezifiziert sind, und/oder dass die Auswerteeinheiten (4, 4-1, 4-2, 4-3) ausgebildet sind, aus den von den Farbsensoren gemessenen Echtfarbwerten Echtfarbwerte in dem CIEL*a*b-Farbraum zu ermitteln.

7. Landwirtschaftliches Gerät (1) nach einem der vorherigen Ansprüche, **dadurch gekennzeichnet, dass** die Auswerteeinheiten (4, 4-1, 4-2, 4-3) ausgebildet sind, Unkrautpflanzen (U) der vorgegebenen Unkrautpflanzenart mittels Vergleich der mit den Farbsensoren (3, 3-1, 3-2, 3-3) gemessenen Echtfarbwerte und vorgegebener Echtfarbwerte in dem CIEL*a*b-Farbraum, insbesondere von Durchwuchskartoffelpflanzen, zu erkennen.

8. Landwirtschaftliches Gerät (1) nach einem der vorherigen Ansprüche, **dadurch gekennzeichnet, dass** die Unkrautbehandlungsvorrichtungen (2, 2-1, 2-2, 2-3) jeweils als separate Abflammbrenner ausgebildet sind, die bei Aktivierung durch die zugeordnete Auswerteeinheit (4, 4-1, 4-2, 4-3) individuell zündbar sind, um in dem jeweiligen Breitenteilabschnitt (B1, B2, B3) erkannte Unkrautpflanzen (U) abzuflammen (F) .

9. Landwirtschaftliches Gerät (1) nach einem der vorherigen Ansprüche, **dadurch gekennzeichnet, dass** das Gerät mindestens einen Abstandsmesssensor zum Messen eines Abstands (h) der Farbsensoren zur Agrarbodenfläche (A) aufweist oder mit mindestens einem Abstandsmesssensor koppelbar ist, wobei bevorzugt für mindestens zwei, besonders bevorzugt sämtliche, der Breitenteilabschnitte (B1, B2, B3) individuelle Abstandsmesssensoren vorgesehen sind, und dass die Auswerteeinheiten (4, 4-1, 4-2, 4-3) ausgebildet sind, die Erkennung von Unkrautpflanzen (U) der vorgegebenen Art und/oder die Ermittlung des Aktivierungskriteriums abhängig von den gemessenen Abstandswerten durchzuführen.

10. Landwirtschaftliches Gerät (1) nach einem der vorherigen Ansprüche, **dadurch gekennzeichnet, dass** die Auswerteeinheiten (4, 4-1, 4-2, 4-3) ausgebildet sind zur Verarbeitung eines Geschwindigkeitssignals eines Geschwindigkeitssensors zum Erfassen einer Fortbewegungsgeschwindigkeit (v) des landwirtschaftlichen Geräts relativ zu der Agrarbodenoberfläche (A), um eine Aktivierungsverzögerung und/oder eine Aktivierungsdauer mindestens einer der zu aktivierenden und/oder aktivierten Unkrautbehandlungsvorrichtungen (2, 2-1, 2-2, 2-3) zu bestimmen.

11. Landwirtschaftliches Gerät (1) nach einem der vorherigen Ansprüche, **dadurch gekennzeichnet, dass** das Gerät mindestens ein Sensormodul (9) zur integrierten Aufnahme mehrerer Farbsensoren (3, 3-1, 3-2, 3-3) und diesen zugeordneter Auswerteeinheiten (4, 4-1, 4-2, 4-3) aufweist, so dass einem Sensormodul (9) mehrere Breitenteilabschnitte (B1, B2, B3) zugeordnet sind.

12. Landwirtschaftliches Gerät nach Anspruch 11, **dadurch gekennzeichnet, dass** das mindestens eine Sensormodul (9) an dem landwirtschaftlichen Gerät (1) abnehmbar montiert ist, und dass das landwirtschaftliche Gerät ohne Sensormodul (9) für eine andere agrartechnische Anwendung, insbesondere zur Herbizidausbringung, ausgebildet ist.

13. Sensormodul (9) für ein landwirtschaftliches Gerät nach Anspruch 11 oder 12.

14. Farbdetektor (5, 5-1, 5-2, 5-3) für ein landwirtschaftliches Gerät nach Anspruch 2, **dadurch gekennzeichnet, dass** der Farbdetektor (5, 5-1, 5-2, 5-3) ausgebildet ist, Echtfarben von eine Agrarbodenfläche (A) bedeckenden Unkrautpflanzen (U) zu messen, eine jeweilige bezüglich der Echtfarben gemessene Unkrautpflanze als eine zu einer vorgegebenen Unkrautpflanzenart zugehörige Unkrautpflanze nur unter den gleichzeitig zu erfüllenden Bedingungen zu erkennen, dass die gemessene Echtfarbe mit für die zu erkennende Unkrautpflanzenart vorgegebenen Echtfarbwerten aus dem CIEL*a*b-Farbraum übereinstimmt, und dass in einem dem Farbdetektor zugeordneten Breitenteilabschnitt (B1, B2, B3) der Agrarbodenfläche ein vorgegebenes Mindestbedeckungsausmaß von der vorgegebenen Unkrautpflanzenart bedeckt ist, wobei das vorgegebene Mindestbedeckungsausmaß mindestens 30%, bevorzugt 40%, besonders bevorzugt 50%, des Breitenteilabschnitts beträgt, und dass der Farbdetektor (5, 5-1, 5-2, 5-3) ausgebildet ist, nur in dem Fall einer erkannten Unkrautpflanze ein zeitlich begrenztes Aktivierungssignal für einen mit dem Farbdetektor (5, 5-1, 5-2, 5-3) elektrisch koppelbaren Abflammbrenner (2, 2-1, 2-2, 2-3) auszugeben.

15. Farbdetektor (5, 5-1, 5-2, 5-3) nach Anspruch 14, **dadurch gekennzeichnet, dass** der Farbdetektor ausgebildet ist, als die für die zu erkennende Unkrautpflanzenart vorgegebenen Echtfarbwerte aus dem CIEL*a*b-Farbraum Echtfarbwerte von auf einer Agrarbodenfläche wachsenden Durchwuchskartoffelpflanzen zu verwenden.

## Claims

1. Agricultural implement (1) for automatically detecting and treating weeds (U) covering an agricultural land surface (A), having:
- a plurality of individual temporarily activatable weed control devices (2, 2-1, 2-2, 2-3) for treating weeds (U) in a respective widthwise section (B1, B2, B3) of an entire working width (B) of the agricultural implement defined by the widthwise sections, wherein at least one, preferably precisely one, of the weed control devices (2, 2-1, 2-2, 2-3) is assigned to a respective widthwise section (B1, B2, B3),
- at least one light emitting unit (6) for emitting visible, in particular white, light in the direction of the agricultural land surface (A) over the entire working width (B),
- a plurality of light-sensitive colour sensors (3, 3-1, 3-2, 3-3) for detecting the light reflected in the widthwise sections (B1, B2, B3) and previously emitted by the at least one light emitting unit (6) and for measuring real colour values of the detected visible light, wherein at least one, preferably precisely one, of the colour sensors (3, 3-1, 3-2, 3-3) is assigned to a respective widthwise section (B1, B2, B3); and
- an evaluation unit (4), which is designed to process the measured real colour values, in order to detect weeds (U) at least partially covering the agricultural land surface in the working width (B), and to individually temporarily activate a respective weed control device (2, 2-1, 2-2, 2- 3), in the assigned widthwise section (B1, B2, B3) of which at least one weed (U) has been detected,
**characterised in that** the agricultural implement (1) has a plurality of evaluation units (4, 4-1, 4-2, 4-3) for processing the measured real colour values, wherein precisely one respective separate evaluation unit (4, 4- 1, 4-2, 4-3) is provided for a respective widthwise section (B1, B2, B3) and is assigned to this widthwise section (B1, B2, B3), and is designed, on the basis of the real colour values measured in this widthwise section (B1, B2, B3) to detect weeds (U) of a predetermined weed species, in particular volunteer potato plants, and, as a temporarily applicable activation criterion for the weed control device (2, 2-1, 2-2, 2-3) assigned to this widthwise section (B1, B2, B3), to determine whether the widthwise section (B1, B2, B3) of the respective weed control device (2, 2-1, 2-2, 2-3), at a particular detection time and/or during the detection period of a predetermined duration and/or a predetermined movement range of the implement (1), is covered with at least a predetermined minimum degree of coverage by the predetermined weed species, wherein the predetermined minimum degree of coverage is at least 30%, preferably at least 40%, most preferably at least 50%, of the respective widthwise section (B1, B2, B3), and to only temporarily activate the weed control device (2, 2-1, 2-2, 2-3) assigned to the widthwise section (B1, B2, B3) for, in particular thermal, targeted treatment of detected weeds (U) of the predetermined weed species, on condition that the determined activation criterion for this widthwise section (B1, B2, B3) is valid.

2. Agricultural implement (1) according to claim 1, **characterised in that** for each widthwise section (B1, B2, B3), the at least one colour sensor (3, 3-1, 3-2, 3-3) and the evaluation unit (4, 4-1, 4-2, 4-3), which are assigned to the same widthwise section (B1, B2, B3), are designed integrally as a colour detector (5, 5-1, 5-2, 5-3), such that a respective widthwise section (B1, B2, B3) is assigned one, preferably precisely one, respective colour detector (5, 5-1, 5-2, 5-3), which is designed, to output a time-limited activation signal to the weed control device (2, 2-1, 2-2, 2-3) assigned to this widthwise section (B1, B2, B3) in the event that the activation criterion determined by the evaluation unit (4, 4-1, 4-2, 4- 3) of the colour detector (5, 5-1, 5-2, 5-3) is currently fulfilled.

3. Agricultural implement (1) according to claim 1 or 2, **characterised in that** the agricultural implement has an interface unit connected using data communication technology to the evaluation units (4, 4-1, 4-2, 4-3), by means of which processes that can be executed by the evaluation units (4, 4-1, 4-2, 4-3) for processing the measured real colour values and for detecting weeds (U) of the predetermined weed species in a respective widthwise section (B1, B2, B3) can be configured and adapted to an application scenario of the agricultural implement, in particular to a species of the crops growing on the agricultural land surface, the moisture of the agricultural land surface, and/or the wetting of weeds and/or crops.

4. Agricultural implement (1) according to any of the preceding claims, **characterised in that** a respective evaluation unit (4, 4-1, 4-2, 4-3) is designed to determine the activation criterion for the predetermined minimum degree of coverage for the assigned weed control device (2, 2-1, 2-2, 2-3) by measuring an intensity value of the detected visible light in the assigned widthwise section (B1, B2, B3) and/or by determining a one-dimensional intensity distribution of the detected visible light in the assigned widthwise section (B1, B2, B3), in particular for a predetermined real colour value of a green colour.

5. Agricultural implement (1) according to any of the preceding claims, **characterised in that** the agricultural implement is designed to detect weeds (U) covering the agricultural land surface (A) in the working width (B) without the use of image and/or video camera signals representing the agricultural land surface (A), **in that** the colour sensors (3, 3-1, 3-2, 3-3) are not designed as image sensors or camera sensors for capturing at least two-dimensional images of the agricultural land (A), and **in that** the evaluation units (4, 4-1, 4-2, 4-3) are designed, without image processing of an at least two-dimensional image, without image- and/or video-based object recognition and/or without pattern recognition, to detect weeds (U) of the predetermined weed species and to determine the activation criterion for a respective weed control device (2, 2-1, 2-2, 2-3).

6. Agricultural implement (1) according to any of the preceding claims, **characterised in that** the colour sensors (3, 3-1, 3-2, 3-3) are designed to measure or determine real colour values in a CIEL*a*b colour space, wherein the real colour values are specified by the three variables, lightness value L, a-axis and b-axis, for evaluation by the evaluation units, and/or **in that** the evaluation units (4, 4-1, 4-2, 4-3) are designed to determine real colour values in the CIEL*a*b colour space from the real colour values measured by the colour sensors.

7. Agricultural implement (1) according to any of the preceding claims, **characterised in that** the evaluation units (4, 4-1, 4-2, 4- 3) are designed to detect weeds (U) of the predetermined species by comparison with the real colour values measured by the colour sensors (3, 3-1, 3-2, 3-3) and predetermined real colour values in the CIEL*a*b colour space, in particular of volunteer potato plants.

8. Agricultural implement (1) according to any of the preceding claims, **characterised in that** the weed control devices (2, 2-1, 2-2, 2-3) are each designed as separate flame burners, which are individually ignitable when activated by the assigned evaluation unit (4, 4-1, 4-2, 4-3), in order to flame weed (F) the weeds (U) detected in the respective widthwise section (B1, B2, B3).

9. Agricultural implement (1) according to any of the preceding claims, **characterised in that** the implement has at least one distance measuring sensor for measuring the distance (h) of the colour sensors to the agricultural land surface (A) or can be connected to at least one distance measuring sensor, wherein individual distance measuring sensors are preferably provided for at least two, most preferably all, of the widthwise sections (B1, B2, B3), and **in that** the evaluation units (4, 4-1, 4-2, 4-3) are designed to perform the detection of weeds (U) of the predetermined species and/or to determine the activation criterion depending on the measured distance values.

10. Agricultural implement (1) according to any of the preceding claims, **characterised in that** the evaluation units (4, 4-1, 4-2, 4- 3) are designed to process a speed signal from a speed sensor to detect a speed of movement (v) of the agricultural implement relative to the agricultural land surface (A), in order to determine an activation delay and/or an activation time of at least one of the weed control devices (2, 2-1, 2-2, 2-3) to be activated and/or activated.

11. Agricultural implement (1) according to any of the preceding claims, **characterised in that** the implement has at least one sensor module (9) for integrated capture of a plurality of colour sensors (3, 3-1, 3-2, 3- 3) and evaluation units (4, 4-1, 4-2, 4-3) assigned to the latter, such that a sensor module (9) is assigned to a plurality of widthwise sections (B1, B2, B3).

12. Agricultural implement according to claim 11, **characterised in that** the at least one sensor module (9) is removably mounted on the agricultural implement (1), and **in that** the agricultural implement is designed without a sensor module (9) for another agricultural application, in particular for herbicide application.

13. Sensor module (9) for an agricultural implement according to claim 11 or 12.

14. Colour detector (5, 5-1, 5-2, 5-3) for an agricultural implement according to claim 2, **characterised in that** the colour detector (5, 5-1, 5-2, 5-3) is designed to measure real colours of weeds (U) covering an agricultural land surface (A), to only detect a weed measured with respect to the real colours as a weed belonging to a predetermined weed species under the conditions to be simultaneously fulfilled, **in that** the real colours measured match the predetermined real colour values from the CIEL*a*b colour space for the weed species to be detected, and **in that** a widthwise section (B1, B2, B3) of the agricultural land surface assigned to the colour detector, is covered with a predetermined minimum degree of coverage of the predetermined weed species, wherein the predetermined minimum degree of coverage is at least 30%, preferably 40%, most preferably 50%, of the widthwise section, and **in that** the colour detector (5, 5-1, 5-2, 5-3) is designed, only in the event that a weed is detected, to output a time-limited activation signal for a flame burner (2, 2-1, 2-2, 2-3) that can be electrically connected to the colour detector (5, 5-1, 5-2, 5-3).

15. Colour detector (5, 5-1, 5-2, 5-3) according to claim 14, **characterised in that** the colour detector is designed to use the real colour values of volunteer potato plants growing on an agricultural land surface as the predetermined real colour values for the weed species to be detected from the CIEL*a*b colour space.

## Revendications

1. Appareil agricole (1) pour la reconnaissance et le traitement automatiques de plantes adventices (U) recouvrant une surface de sol agricole (A), avec :
- plusieurs dispositifs de traitement d'adventice (2, 2-1, 2-2, 2-3) activables individuellement temporairement pour le traitement de plantes adventices (U) dans une section partielle de largeur (B1, B2, B3) respective d'une largeur de traitement (B) entière définie par les sections partielles de largeur de l'appareil agricole, dans lequel au moins un, de préférence précisément un, des dispositifs de traitement d'adventice (2, 2-1, 2-2, 2-3) est associé à une section partielle de largeur (B1, B2, B3) respective ;
- au moins une unité d'émission de lumière (6) pour l'émission de lumière visible, en particulier blanche, en direction de la surface de sol agricole (A) sur la largeur de traitement entière (B) ;
- plusieurs capteurs de couleur (3, 3-1, 3-2, 3-3) photosensibles pour la détection de la lumière visible réfléchie dans les sections partielles de largeur (B1, B2, B3) et émise au préalable par la au moins une unité d'émission de lumière (6) et pour la mesure de valeurs de couleurs réelles de la lumière visible détectée, dans lequel au moins un, de préférence précisément un, des capteurs de couleur (3, 3-1, 3-2, 3-3) est associé à une section partielle de largeur (B1, B2, B3) respective ; et
- une unité d'évaluation (4) qui est configurée pour le traitement des valeurs de couleurs réelles mesurées afin de détecter des plantes adventices recouvrant au moins partiellement la surface agricole dans la largeur de traitement (B), et pour l'activation temporaire individuelle d'un dispositif de traitement d'adventice (2, 2-1, 2-2, 2-3) respectif, dans la section partielle de largeur associée duquel (B1, B2, B3) au moins une plante adventice (U) a été détectée,
**caractérisé en ce que** l'appareil agricole (1) présente plusieurs unités d'évaluation (4, 4-1, 4-2, 4-3) pour le traitement de valeurs de couleurs réelles mesurées, dans lequel pour une section partielle de largeur (B1, B2, B3) respective, précisément une unité d'évaluation (4, 4-1, 4-2, 4-3) séparée respective et associée à cette section partielle de largeur (B1, B2, B3) est fournie, unité qui est configurée afin de reconnaître sur la base des valeurs de couleurs réelles mesurées dans cette section partielle de largeur (B1, B2, B3) des plantes adventices (U) d'un type de plante d'adventice prédéfini, en particulier des plants de pomme de terre de repousse et de déterminer comme un critère d'activation valide temporairement pour le dispositif de traitement d'adventice (2, 2-1, 2-2, 2-3) associé à cette section partielle de largeur (B1, B2, B3) si la section partielle de largeur (B1, B2, B3) du dispositif de traitement d'adventice (2, 2-1, 2-2, 2-3) respectif est recouverte à un moment respectif de la détermination et/ou pendant un intervalle de détermination d'une durée prédéfinie et/ou un parcours de déplacement prédéfini de l'appareil (1) au moins à un degré de recouvrement minimal prédéfini par le type de plante adventice prédéfini, dans lequel le degré de recouvrement minimal prédéfini s'élève au moins à 30 %, de préférence au moins à 40 %, le plus préférentiellement au moins à 50 %, de la section partielle de largeur (B1, B2, B3) respective, et d'activer le dispositif de traitement d'adventice (2, 2-1, 2-2, 2-3) associé à la section partielle de largeur (B1, B2, B3) temporairement pour le traitement ciblé, en particulier thermique des plantes adventices (U) reconnues du type de plante adventice (U) prédéfini seulement à la condition que le critère d'activation déterminé pour cette section partielle de largeur (B1, B2, B3) soit valide.

2. Appareil agricole (1) selon la revendication 1, **caractérisé en ce que** pour chaque section partielle de largeur (B1, B2, B3), l'au moins un capteur de couleur (3, 3-1, 3-2, 3-3) et l'unité d'évaluation (4, 4-1, 4-2, 4-3), qui sont associés à la même section partielle de largeur (B1, B2, B3), sont configurés d'un seul tenant comme un détecteur de couleur (5, 5-1, 5-2, 5-3) de sorte qu'à une section partielle de largeur (B1, B2, B3) respective est associé un, de préférence précisément un, détecteur de couleur (5, 5-1, 5-2, 5-3) respectif qui est configuré afin de sortir un signal d'activation délimité dans le temps à l'attention du dispositif de traitement d'adventice (2, 2-1, 2-2, 2-3) associé à cette section partielle de largeur (B1, B2, B3) pour le cas où le critère d'activation déterminé par l'unité d'évaluation (4, 4-1, 4-2, 4- 3) du détecteur de couleur (5, 5-1, 5-2, 5-3) est actuellement rempli.

3. Appareil agricole (1) selon la revendication 1 ou 2, **caractérisé en ce que** l'appareil agricole présente une unité d'interface couplée en communication de données avec les unités d'évaluation (4, 4-1, 4-2, 4-3), par le biais de laquelle des processus exécutables par les unités d'évaluation (4, 4-1, 4-2, 4-3) peuvent être configurés pour le traitement des valeurs de couleurs réelles mesurées et pour la reconnaissance des plantes adventices (U) du type de plante adventice prédéfini dans une section partielle de largeur (B1, B2, B3) respective et adaptés à un scénario d'application de l'appareil agricole, en particulier à un type de plantes cultivées en pleine croissance sur la surface de sol agricole, une humidité de la surface de sol agricole, et/ou une humidification des plantes adventices et/ou plantes cultivées.

4. Appareil agricole (1) selon l'une des revendications précédentes, **caractérisé en ce qu'**une unité d'évaluation (4, 4-1, 4-2, 4-3) respective est configurée afin de déterminer le critère d'activation du degré de recouvrement minimal prédéfini pour le dispositif de traitement d'adventice (2, 2-1, 2-2, 2-3) associé au moyen de la mesure d'une valeur d'intensité de la lumière visible détectée dans la section partielle de largeur (B1, B2, B3) associée et/ou au moyen d'une détermination d'une répartition d'intensité unidimensionnelle de la lumière visible détectée dans la section partielle de largeur (B1, B2, B3) associée, en particulier pour une valeur de couleur réelle prédéfinie d'une couleur verte.

5. Appareil agricole (1) selon l'une des revendications précédentes, **caractérisé en ce que** l'appareil agricole est configuré afin de reconnaître des plantes adventices (U) recouvrant la surface de sol agricole (A) dans la largeur de traitement (B) sans utilisation de signaux d'image et/ou de caméra vidéo représentant la surface de sol agricole (A), que les capteurs de couleur (3, 3-1, 3-2, 3-3) ne sont pas configurés comme capteur d'image ou capteur de caméra pour la détection d'images au moins à deux dimensions de la surface agricole (A), et que les unités d'évaluation (4, 4-1, 4-2, 4-3) sont configurées afin de reconnaître sans un traitement d'image d'une image au moins à deux dimensions, sans une reconnaissance d'objet basé sur l'image et/ou la vidéo et/ou sans reconnaissance de motif des plantes adventices (U) du type de plante adventice prédéfini et de déterminer le critère d'activation pour un dispositif de traitement d'adventice (2, 2-1, 2-2, 2-3) respectif.

6. Appareil agricole (1) selon l'une des revendications précédentes, **caractérisé en ce que** les capteurs de couleur (3, 3-1, 3-2, 3-3) sont configurés pour la mesure ou la détermination de valeurs de couleurs réelles dans un espace de couleur CIEL*a*b, dans lequel les valeurs de couleurs réelles sont spécifiées par les trois grandeurs valeur de luminance L, valeur a et valeur b pour l'évaluation par les unités d'évaluation, et/ou que les unités d'évaluation (4, 4-1, 4-2, 4-3) sont configurées afin de déterminer à partir des valeurs de couleurs réelles mesurées par les capteurs de couleur dans l'espace de couleur CIEL*a*b.

7. Appareil agricole (1) selon l'une des revendications précédentes, **caractérisé en ce que** les unités d'évaluation (4, 4-1, 4-2, 4- 3) sont configurées afin de reconnaître des plantes adventices (U) du type de plante adventice prédéfini par comparaison des valeurs de couleurs réelles mesurées avec les capteurs de couleur (3, 3-1, 3-2, 3-3) et des valeurs de couleurs réelles prédéfinies dans l'espace de couleur CIEL*a*b, en particulier de plants de pomme de terre de repousse.

8. Appareil agricole (1) selon l'une des revendications précédentes, **caractérisé en ce que** les dispositifs de traitement d'adventice (2, 2-1, 2-2, 2-3) sont configurés respectivement comme brûleurs à flamme séparés qui sont allumables individuellement lors de l'activation par l'unité d'évaluation (4, 4-1, 4-2, 4-3) associée afin de brûler des plantes adventices (U) reconnues dans la section partielle de largeur (B1, B2, B3) respective (F).

9. Appareil agricole (1) selon l'une des revendications précédentes, **caractérisé en ce que** l'appareil présente au moins un capteur de mesure de distance pour la mesure d'une distance (h) des capteurs de couleur par rapport à la surface de sol agricole ou peut être couplé à au moins un capteur de mesure de distance, dans lequel de préférence pour au moins deux, le plus préférentiellement toutes, des sections partielles de largeur (B1 B2, B3), des capteurs de mesure de distance individuels sont prévus, et que les unités d'évaluation (4, 4-1, 4-2, 4-3) sont configurées afin de réaliser la reconnaissance de plantes adventices (U) du type prédéfini et/ou la détermination du critère d'activation en fonction des valeurs de distance mesurées.

10. Appareil agricole (1) selon l'une des revendications précédentes, **caractérisé en ce que** les unités d'évaluation (4, 4-1, 4-2, 4- 3) sont réalisées pour le traitement d'un signal de vitesse d'un capteur de vitesse pour la détection d'une vitesse de déplacement (v) de l'appareil agricole par rapport à la surface de sol agricole (A) afin de déterminer un retard d'activation et/ou une durée d'activation au moins d'un des dispositifs de traitement d'adventice (2, 2-1, 2-2, 2-3) activés ou à activer.

11. Appareil agricole (1) selon l'une des revendications précédentes, **caractérisé en ce que** l'appareil présente au moins un module capteur (9) pour la réception intégrée de plusieurs capteurs de couleur (3, 3-1, 3-2, 3-3) et unités d'évaluation (4, 4-1, 4-2, 4-3) qui leur sont associées de sorte que plusieurs sections partielles de largeur (B1, B2, B3) soient associées à un module capteur (9).

12. Appareil agricole selon la revendication 11, **caractérisé en ce que** l'au moins un module capteur (9) est monté de manière amovible au niveau de l'appareil agricole (1), et que l'appareil agricole est configuré sans module capteur (9) pour une autre application agrotechnique, en particulier pour épandre de l'herbicide.

13. Module capteur (9) pour un appareil agricole selon la revendication 11 ou 12.

14. Détecteur de couleur (5, 5-1, 5-2, 5-3) pour un appareil agricole selon la revendication 2, **caractérisé en ce que** le détecteur de couleur (5, 5-1, 5-2, 5-3) est configuré afin de mesurer des couleurs réelles de plantes adventices (U) recouvrant une surface de sol agricole (A), de reconnaître une plante adventice respective mesurée en référence aux couleurs réelles comme une plante adventice appartenant à un type de plante adventice prédéfini seulement dans les conditions à remplir simultanément, que la couleur réelle mesurée coïncide avec des valeurs de couleurs réelles prédéfinies pour le type de plante adventice à reconnaître à partir de l'espace de couleur CIEL*a*b, et que dans une section partielle de largeur (B1, B2, B3) associée au détecteur de couleur de la surface de sol agricole, un degré de recouvrement minimal prédéfini est recouvert par le type de plante adventice prédéfini, dans lequel le degré de recouvrement minimal prédéfini s'élève au moins à 30 %, de préférence à 40 %, le plus préférentiellement à 50 %, de la section partielle de largeur, et que le détecteur de couleur (5, 5-1, 5-2, 5-3) est configuré afin de sortir seulement dans le cas d'une plante adventice reconnue un signal d'activation limité dans le temps pour un brûleur à flamme (2, 2-1, 2-2, 2-3) couplable électriquement au détecteur de couleur (5, 5-1, 5-2, 5-3).

15. Détecteur de couleur (5, 5-1, 5-2, 5-3) selon la revendication 14, **caractérisé en ce que** le détecteur de couleur est configuré afin d'utiliser comme les valeurs de couleurs réelles prédéfinies pour le type de plante adventice à reconnaître à partir de l'espace de couleur CIEL*a*b des valeurs de couleurs réelles de plants de pomme de terre de repousse croissant sur une surface de sol agricole.
